# EUROPÄISCHE PATENTSCHRIFT

(11) **EP 2 910 097 B1**
(45) Veröffentlichungstag und Bekanntmachung des Hinweises auf die Patenterteilung: **19.12.2018**
(21) Anmeldenummer: 15152105.1
(22) Anmeldetag: 22.01.2015
(51) Int. Cl.: A01B 63/14

(54) **Vibrationsdämpfende Ansteuerung eines Aktors einer landwirtschaftlichen Arbeitsmaschine**
Vibration-damping driving of an actuator of an agricultural working machine
Dispositif de commande amortissant les vibrations d'un actionneur d'une machine de travail agricole

(30) Priorität: 19.02.2014 DE 102014203005
(43) Veröffentlichungstag der Anmeldung: 26.08.2015
(73) Patentinhaber: Deere & Company, Moline, IL 61265 (US)
(72) Erfinder: Münch, Philipp, 67663 Kaiserslautern (DE); Jung, Benedikt, 67655 Kaiserslautern (DE)
(74) Vertreter: Holst, Sönke

(56) Entgegenhaltungen:
- EP-A1- 2 591 660
- EP-A1- 2 671 439
- WO-A1-2008/006730
- DE-A1- 10 054 285
- DE-A1-102010 017 459
- DE-C2- 3 446 811

## Beschreibung

Die Erfindung betrifft eine Anordnung zur Ansteuerung eines Aktors zur Verstellung eines verstellbaren Elements einer landwirtschaftlichen Arbeitsmaschine.

### Technologischer Hintergrund

Landwirtschaftliche Arbeitsmaschinen umfassen in der Regel Elemente, die durch zugeordnete Aktoren gegenüber der Arbeitsmaschine verstellbar, d.h. linear verschiebbar oder verschwenkbar sind. Hierzu zählen im Falle eines Traktors ein an einem Front- oder Heckkraftheber eines Traktors angebrachtes Arbeitsgerät beispielsweise zur Bodenbearbeitung, zum Säen oder zum Ausbringen von Dünger oder anderen Chemikalien, bei einer selbstfahrenden Feldspritze ein höhenverstellbares und/oder um eine sich in Vorwärtsrichtung erstreckenden Achse schwenkbares Spritzgestänge, bei einem Mähdrescher oder Feldhäcksler ein Erntevorsatz, der zur Höhenverstellung um eine horizontale, quer zur Vorwärtsrichtung orientierte Achse (in der Regel die Drehachse einer oberen Schrägfördererwalze bzw. Häckseltrommel) und/oder zur parallelen Ausrichtung an einem Seitenhang um eine sich in Vorwärtsrichtung erstreckende Achse schwenkbar ist, oder ein zur Höhenverstellung seines Auslassendes um eine horizontale Achse höhenverstellbarer und/oder um die Hochachse höhenverstellbarer Auswurfkrümmer eines Feldhäckslers. Die Sollposition des Aktors und somit des verstellbaren Elements wird durch einen Bediener über eine geeignete Schnittstelle oder durch eine mit Sensoren zusammenwirkende, automatische Steuerung vorgegeben.

Da die Arbeitsmaschine auf luftgefüllten (und somit federnd nachgiebigen) Rädern ruht und zudem mit einer Federung zwischen den Rädern und dem Körper der Arbeitsmaschine versehen sein kann, wird das System aus dem verstellbaren Element und der Arbeitsmaschine bei jeder Verstellung des Aktors zu einer (Eigen-) Schwingung angeregt, die sich im Betrieb als störend auswirken kann. So können Schneidwerke eine Breite von 12 m oder mehr aufweisen und, wenn sie in Höhen von wenigen cm über dem Boden geführt werden, kann mitunter aufgrund der bei einer Höhenverstellung entstehenden Schwingung eine gewünschte Schnitthöhe nicht aufrecht erhalten werden.

Im Stand der Technik sind Regelschaltungen bekannt, die mit einem Sensor zur Erfassung der jeweiligen Position des verstellbaren Elements ausgerüstet sind, deren Signal zur Zurückführung der Ist-Position des Elements an eine Regelschaltung dient (vgl. beispielsweise US 2009/0277145 A1). Dadurch werden eventuelle, durch die Schwingungen des Elements bedingte Abweichungen des Elements von seiner Sollposition zwar erfasst und der Regelschaltung zurückgeführt, jedoch nur relativ langsam gedämpft.

Weiterhin wurde vorgeschlagen, eventuelle Ursachen für Schwingungen eines Anbaugeräts eines landwirtschaftlichen Fahrzeugs, z.B. Bodenunebenheiten, zu erfassen und ihren Einfluss auf das Anbaugerät zu identifizieren, um den Aktor gegenphasig zur erwarteten Schwingungsursache ansteuern und somit eine unerwünschte Schwingung des Elements zu vermeiden (DE 34 46 811 C2, DE 10 2010 017 459 A1). Diese Vorgehensweise berücksichtigt jedoch nicht die bei Änderungen der Sollvorgabe der Position des Elements entstehenden Schwingungen und kann diese daher nicht bekämpfen.

### Aufgabe

Die vorliegende Erfindung hat sich zur Aufgabe gesetzt, eine Anordnung zur Ansteuerung eines Aktors zur Verstellung eines verstellbaren Elements einer landwirtschaftlichen Arbeitsmaschine bereitzustellen, welche eine Verminderung unerwünschter, durch die Verstellung des Aktors bedingter Schwingungen des Elements ermöglicht.

### Erfindung

Die vorliegende Erfindung wird durch die Patentansprüche definiert.

Eine Anordnung zur Ansteuerung eines Aktors zur Verstellung eines verstellbaren Elements einer landwirtschaftlichen Arbeitsmaschine umfasst eine Vorgabeeinrichtung zur Erzeugung von Stellbefehlen für das verstellbare Element, eine Kontrollanordnung des mit dem verstellbaren Element gekoppelten Aktors und eine mit der Vorgabeeinrichtung und der Kontrollanordnung zusammenwirkende Signalformungsanordnung. Die Signalumformungseinrichtung beaufschlagt die Kontrollanordnung bei Erhalt eines Stellbefehls zunächst mit einem vom Stellbefehl abhängigen, ersten Signal und zeitlich anschließend mit einem vom Stellbefehl abhängigen, gegenüber dem ersten Signal zeitverzögerten, zweiten Signal, das zur Verminderung oder Tilgung einer durch das erste Signal generierten Eigenschwingung des aus Arbeitsmaschine und Element bestehenden Systems führt.

Mit anderen Worten gibt die Vorgabeeinrichtung Stellbefehle für das verstellbare Element ab, z.B. zum Absenken, Anheben oder Verschwenken, damit das verstellbare Element nach der Ausführung des Stellbefehls eine gewünschte, neue Sollposition erreicht. Dieser Stellbefehl wird einer Signalumformungsanordnung zugeführt, die (in der Regel zeitlich nicht wesentlich verzögert) ein vom Stellbefehl abhängiges, erstes Signal an eine Kontrollanordnung abgibt, die wiederum einen Aktor mit einem vom Stellbefehl abhängigen, ersten Signal ansteuert (sei es elektrisch, wenn der Aktor ein Elektromotor ist, oder hydraulisch, wenn der Aktor ein Hydraulikzylinder oder -motor ist). Der Aktor bewegt somit das verstellbare Element in eine durch den Stellbefehl vorgegebene, gewünschte Richtung auf seine Sollposition zu. Bei diesem Vorgang kann das verstellbare Element und die mit ihm verbundene Arbeitsmaschine in eine Schwingung mit einer durch mechanische Größen des Systems aus Arbeitsmaschine und verstellbarem Element vorgegebenen Eigenfrequenz versetzt werden, deren Amplitude nach und nach entsprechend einer Dämpfung des Systems absinken würde. Um diese Eigenschwingung zu dämpfen, gibt die Signalumformungsanordnung ein vom Stellbefehl abhängiges, zweites, gegenüber dem ersten Signal zeitlich verzögertes Signal an die Kontrollanordnung. Das zweite Signal ist derart bemessen, dass das Element einen mechanischen Impuls erhält, der sich mit der angefangenen Eigenschwingung des aus Arbeitsmaschine und Element bestehenden Systems auslöscht. Dadurch wird die unerwünschte Schwingung des Elements bzw. des Systems aus Arbeitsmaschine und Element reduziert oder sogar ausgelöscht. Die Form des Impulses hängt von dem zeitlichen Verlauf des ursprünglichen Stellbefehls ab und kann somit abhängig davon ebenfalls einen beliebigen zeitlichen Verlauf aufweisen.

Die zeitliche Verzögerung des zweiten Signals gegenüber dem ersten Signal entspricht insbesondere einer halben Schwingungsperiode der Eigenschwingung des Systems aus Arbeitsmaschine und Element. Die Amplitude des zweiten Signals ist analog vorzugsweise derart, dass eine Auslöschung der durch das erste Signal angeregten Eigenschwingung des Systems aus Arbeitsmaschine und Element erfolgt.

Die Signalformungsanordnung umfasst vorzugsweise einen mit der Vorgabeeinrichtung verbundenen Eingang und einen mit der Kontrollanordnung verbundenen Ausgang, einen mit dem Eingang und dem Ausgang verbundenen, ersten Zweig, der den Stellbefehl mit einer ersten Verstärkung an den Ausgang weiterleitet sowie einen zweiten Zweig, der den Stellbefehl durch einen Signalverzögerer leitet und mit einer zweiten Verstärkung an den Ausgang weitergibt.

Die erste Verstärkung und/oder die zweite Verstärkung und/oder die zeitliche Verzögerung des Signalverzögerers kann fest vorgegeben sein oder durch eine Bestimmungseinrichtung bestimmt werden, welche die erwähnten Parameter der Signalumformungsanordnung anhand von Daten hinsichtlich einer erfassten Resonanzfrequenz und/oder eines Dämpfungsfaktors des aus der Arbeitsmaschine mit dem Element bestehenden Systems festlegt.

Hierzu kann die Bestimmungseinrichtung mit einem Drucksensor zur Erfassung des Drucks in einem als Aktor vorgesehenen Hydraulikzylinder und/oder mit einem Sensor zur Erfassung der Bewegung des Elements und/oder einem elektrischen Sensor zur Erfassung der elektrischen Ansteuerung (z.B. Strom, Spannung oder Antriebsleistung) eines elektrischen Aktors verbunden werden und vor Aufnahme und/oder während des Betriebs des Arbeitsfahrzeugs aus den Signalen des Sensors die Daten hinsichtlich der Resonanzfrequenz und/oder des Dämpfungsfaktors des aus der Arbeitsmaschine mit dem Element bestehenden Systems ableiten.

Alternativ oder zusätzlich können der Bestimmungseinrichtung Signale hinsichtlich eines Reifenparameters und/oder Bodenparameters und/oder eines Füllstand eines Behälters des Arbeitsfahrzeugs, insbesondere eines Korntanks und/oder eines Kraftstofftanks zugeführt werden und die Bestimmungseinrichtung aus den erwähnten Signalen die Daten hinsichtlich der Resonanzfrequenz und/oder des Dämpfungsfaktors des aus der Arbeitsmaschine mit dem Element bestehenden Systems ableiten oder feinabstimmen.

Die Vorgabeeinrichtung kann die Stellbefehle anhand von Ausgangswerten berührungsloser vorausschauender oder mechanisch mit dem Boden zusammenwirkender Sensoren oder aus einer Karte abgeleiteter Werte produzieren. Hierbei kann sie zusätzlich optional den Füllstand eines Behälters des Arbeitsfahrzeugs, insbesondere eines Korntanks und/oder eines Kraftstofftanks, und/oder einen Drucksensor zur Erfassung des Drucks in einem als Aktor vorgesehenen Hydraulikzylinder und/oder Signale eines Sensors zur Erfassung der Bewegung des Elements verwenden.

Das verstellbare Element ist insbesondere ein an einem Front- oder Heckkraftheber eines Traktors angebrachtes Arbeitsgerät (z.B. zur Bodenbearbeitung, zum Säen oder zum Ausbringen von Dünger oder anderen Chemikalien, insbesondere ein höhenverstellbares und/oder um eine sich in Vorwärtsrichtung erstreckenden Achse schwenkbares Spritzgestänge) oder ein höhenverstellbares und/oder um eine sich in Vorwärtsrichtung erstreckende Achse schwenkbares Spritzgestänge einer selbstfahrenden Feldspritze oder ein um eine horizontale, in Vorwärtsrichtung einer Erntemaschine und/oder quer dazu verstellbarer Erntevorsatz oder ein um eine vertikale und/oder horizontale Achse verstellbarer Auswurfkrümmer eines Feldhäckslers.

### Ausführungsbeispiel

In den Zeichnungen ist ein nachfolgend näher beschriebenes Ausführungsbeispiel der Erfindung dargestellt, wobei die Bezugszeichen nicht zu einer einschränkenden Auslegung der Patentansprüche herangezogen werden dürfen. Es zeigt:
- Fig. 1: eine schematische seitliche Ansicht eines Arbeitsfahrzeugs mit einem verstellbaren Element, und
- Fig. 2: eine schematische Darstellung der Anordnung zur Ansteuerung eines Aktors zur Verstellung des verstellbaren Elements.

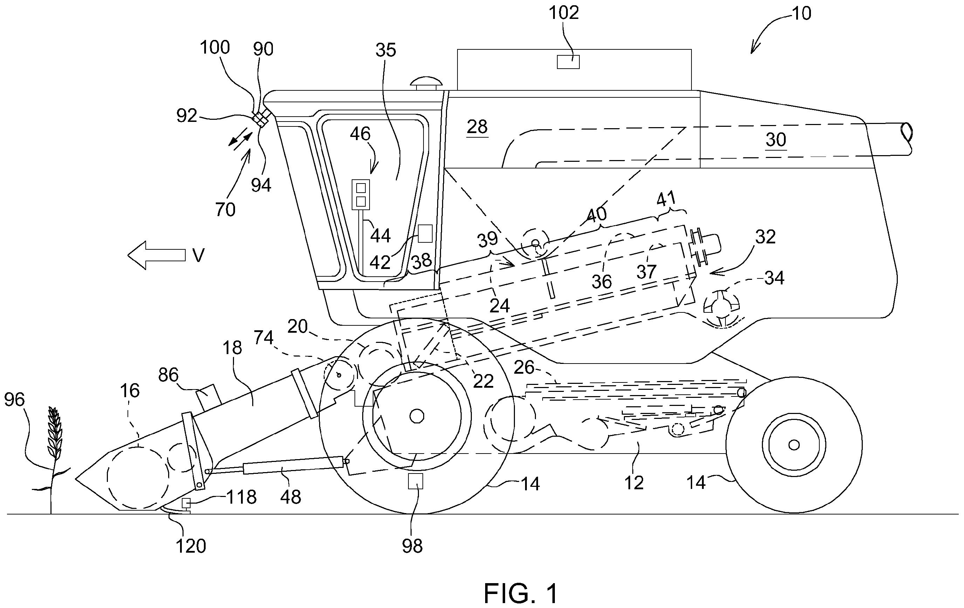

Die Figur 1 zeigt eine selbstfahrende landwirtschaftliche Arbeitsmaschine 10 in Form eines Mähdreschers mit einer tragenden Struktur 12, die mit im Eingriff mit dem Erdboden stehenden Rädern 14 versehen ist. Obwohl die Arbeitsmaschine 10 mit Rädern dargestellt ist, könnte sie auch mit zwei oder vier Gleisketten versehen sein. Ein Erntevorsatz 16 in Form eines Schneidwerks wird zum Ernten von Erntegut verwendet und führt es einem Schrägförderer 18 zu. Der Schrägförderer 18 enthält eine Fördereinrichtung, um das geerntete Gut einer Leittrommel 20 zuzuführen. Die Leittrommel 20 führt das Gut nach oben durch einen Einlassübergangsabschnitt 22 hindurch und einer drehbaren, zum Dreschen und Trennen eingerichteten Gutbearbeitungseinrichtung 24 zu. Die dargestellte Gutbearbeitungseinrichtung 24 ist im Mähdrescher axial angeordnet, sie könnte aber auch in anderen Orientierungen relativ zur Längsachse der Arbeitsmaschine 10 angeordnet sein.

Im Betrieb drischt und trennt die Gutbearbeitungseinrichtung 24 das geerntete Gut. Das Korn und die Spreu fallen durch Roste am Boden der Gutbearbeitungseinrichtung 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer 30 einem Lastwagen oder Anhänger zugeführt werden.

Ausgedroschenes, vom Korn befreites Stroh wird von der Gutbearbeitungseinrichtung 24 durch einen Auslass 32 einer Auswurftrommel 34 zugeführt. Die Auswurftrommel 34 stößt das Stroh wiederum an der Rückseite der Arbeitsmaschine 10 aus. Es ist anzumerken, dass die Auswurftrommel 34 das vom Korn befreite Gut auch direkt einem Strohhäcksler zuführen könnte. Der Betrieb der Arbeitsmaschine 10 wird von einer Bedienerkabine 35 aus gesteuert. Die Gutbearbeitungseinrichtung 24 umfasst ein zylindrisches Rotorgehäuse 36 und einen im Rotorgehäuse 36 angeordneten, drehbaren Rotor 37. Der vordere Teil des Rotors 37 und das Rotorgehäuse 36 definieren einen Beschickungsabschnitt 38. Stromab des Beschickungsabschnitts 38 sind ein Dreschabschnitt 39, ein Trennabschnitt 40 und ein Auslassabschnitt 41. Der Rotor 37 ist im Beschickungsabschnitt 38 mit einer konischen Rotortrommel versehen, die wendelförmige Beschickungselemente zum Eingreifen in Gut aufweist, das sie von der Leittrommel 20 und vom Einlassübergangsbereich 22 erhält. Unmittelbar stromab des Beschickungsabschnitts 38 befindet sich der Dreschabschnitt 39. Im Dreschabschnitt 39 weist der Rotor 37 eine zylindrische Rotortrommel auf, die mit einer Anzahl von Dreschelementen versehen ist, um das vom Beschickungsabschnitt 38 erhaltene Gut zu dreschen. Stromab des Dreschabschnitts 39 befindet sich der Trennabschnitt 40, in dem das im gedroschenen Gut noch enthaltene Korn freigesetzt wird und durch ein bodenseitiges Rost im Rotorgehäuse 36 hindurch in das Reinigungssystem 28 fällt. Der Trennabschnitt 40 geht in den Auslassabschnitt 41 über, in dem das vom Korn befreite Gut (Stroh) aus der Gutbearbeitungseinrichtung 24 ausgestoßen wird.

Die Höhensteuerung des Erntevorsatzes 16, der in der vorliegenden Ausführungsform als Beispiel für ein verstellbares Element der Arbeitsmaschine 10 dient, erfolgt mittels eines Aktors 48 in Form eines Hydraulikzylinders, welcher den Schrägförderer 18 mit dem daran befestigten Erntevorsatz 16 um die quer zur Vorwärtsrichtung V und horizontal orientierte Drehachse der oberen Umlenkwalze 74 des Schrägförderers 18 verstellt und somit den Abstand zwischen dem Erntevorsatz 16 und dem Erdboden definiert. Der Aktor 48 wird mittels einer Steuerung 42 kontrolliert. Die gewünschte (Soll-) Höhe des Erntevorsatzes 16 wird mittels einer Bedienerschnittstelle 46 mit Tasten vorgegeben, die am oberen Ende eines Fahrhebels 44 angebracht sind, welcher schwenkbar angelenkt ist und zur Vorgabe der Vortriebsgeschwindigkeit der Arbeitsmaschine 10 dient. Zusätzlich ist eine vorausschauende Sensorik 70 mit einem Radarsender 92, einem Radarempfänger 94 und einer Auswertungseinheit 90 am Dach der Kabine 35 montiert, wobei der Radarsender 92 und der Radarempfänger 94 um eine Achse 100 hin- und herschwenken, um die Kontur des Felds vor der Arbeitsmaschine 10 mit den Pflanzenbestand 96 durchdringenden Strahlen abzutasten und vorausschauende Werte für die Steuerung 42 zu gewinnen. Ein mit einem Bodenfühler 120 zusammenwirkender Höhensensor 118 erfasst zudem die tatsächliche Höhe des Erntevorsatzes 16 über dem Boden.

Bei der Positions- und Lageänderung des Erntevorsatzes 16 (z. B. Heben und Senken, in einer anderen Ausführungsform zusätzlich laterales Verkippen) entstehen im Stand der Technik bei Änderungen der Positionssollwerte des Erntevorsatzes 16 Erregermomente und Erregerkräfte, welche auf die auf großvolumigen Reifen stehende Arbeitsmaschine 10 übertragen werden. Bedingt durch die großvolumigen Reifen wird hier das System aus Arbeitsmaschine 10 mit Erntevorsatz 16 zu mechanischen Schwingungen angeregt, welche die Genauigkeit der Höhenlage und der Verkippung des Erntevorsatzes 16 - relativ zum Boden - negativ beeinflussen. Je nach Art der Erregerkräfte und -momente wird die Erntemaschine-Vorsatz-Einheit mit Schwingungen unterschiedlicher Frequenz, Dämpfung und Amplitude angeregt. Im besonderen Maße werden hier auch Resonanzfrequenzen der Erntemaschine-Vorsatz-Einheit angeregt, so dass starke Eigenschwingungen entstehen können. Diese Schwingungen stehen dem Ziel einer konstanten Schnitthöhe des Ernteguts entgegen und verschlechtern das Ergebnis der Vorsatzhöhenregelung.

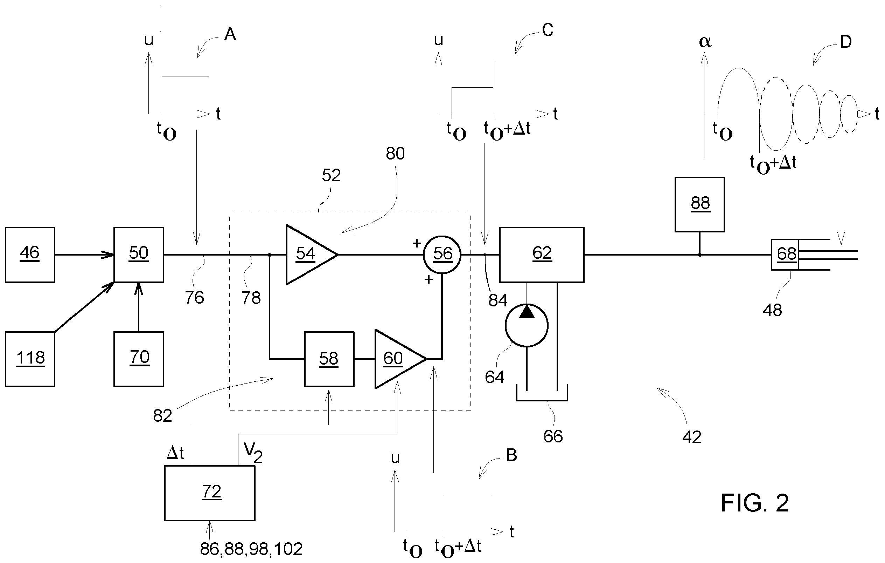

Es wird nun auf die Figur 2 verwiesen, in welcher die Steuerung 42 im Detail dargestellt ist. Die Steuerung 42 umfasst eine Vorgabeeinrichtung 50, die mit der Bedienerschnittstelle 46, dem Höhensensor 118 und der vorausschauenden Sensorik 70 verbunden ist. Die Vorgabeeinrichtung 50 erzeugt während des Betriebs kontinuierlich Stellbefehle, die sie an einen Ausgang 76 abgibt. Diese Stellbefehle sind in an sich bekannter Weise derart bemessen, dass der Erntevorsatz 16 auf einer Höhe über dem Boden geführt wird, die mit der mit der Bedienerschnittstelle 46 vorgegebenen Höhe zumindest näherungsweise übereinstimmt. Die Signale des Höhensensors 118 dienen als Rückkopplungssignale und die Signale der vorausschauenden Sensorik 70 dazu, den Erntevorsatz 16 rechtzeitig (vorausschauend) zu verstellen, bevor er ansteigende oder absinkende Teile des Felds erreicht.

Die Stellbefehle am Ausgang 76 der Vorgabeeinrichtung 50 werden dem Eingang 78 einer Signalformungsanordnung 52 zugeführt. Die Signalumformungsanordnung 52 umfasst einen ersten Zweig 80 mit einem ersten Verstärker 54, dessen Eingang mit dem Eingang 78 und dessen Ausgang mit einem ersten Eingang eines Summierers 56 verbunden ist, und einen zweiten Zweig 80 mit einem Signalverzögerer 58, dessen Eingang mit dem Eingang 78 und dessen Ausgang mit dem Eingang eines zweiten Verstärkers 60 verbunden ist, dessen Ausgang wiederum mit einem zweiten Eingang des Summierers 56 gekoppelt ist. Der Ausgang des Summierers 56 ist gleichzeitig der Ausgang 84 der Signalumformungsanordnung 52. Die Signalumformungsanordnung 52 kann analog oder digital ausgeführt sein und im Zeit- oder Frequenzbereich arbeiten.

Der Ausgang 84 der Signalumformungsanordnung 52 ist mit einer Kontrolleinrichtung 62 verbunden, bei der es sich um eine elektrohydraulische Einheit mit (Proportional- oder pulsweitenkodierten) Ventilen zur Kontrolle der Position des Aktors 48 handelt. Die Kontrolleinrichtung 62 ist mit einer Pumpe 64 zur Druckversorgung, dem Kolbenraum 68 des Aktors 48 und einem hydraulischen Reservoir 66 verbunden, aus dem auch die Pumpe 64 gespeist wird. Die der Kontrolleinrichtung 62 zugeführten Signale am Ausgang 84 der Signalumformungsanordnung 52 sind Senk- oder Hebesignale, die von der Kontrolleinrichtung 62 in entsprechende Ansteuersignale ihrer Ventile umgesetzt werden, um den Aktor 48 in Reaktion auf die Signale einzuziehen oder auszustrecken. Die Polarität und Höhe des Signals am Ausgang 84 gibt die Richtung und Geschwindigkeit der Verstellung des Aktors 48 vor und ihre zeitliche Dauer die zeitliche Dauer der Aktivierung des Aktors 48.

Die Wirkungsweise der Steuerung 42 ist folgendermaßen. Wenn die Vorgabeeinrichtung 50 einen Stellbefehl zum Anheben des Erntevorsatzes 16 ausgibt, liegt zu einem Zeitpunkt t₀ ein Stellbefehl mit der Form eines Rechteckimpulses am Ausgang 76 der Vorgabeeinrichtung 50 an, wie in dem Diagramm A der Figur 2 dargestellt ist. Dieser Stellbefehl wird durch den ersten Verstärker 54 des ersten Zweigs 80 der Signalumformungsanordnung 52 lediglich mit einer vorgegebenen, ersten Verstärkung verstärkt und an den ersten Eingang des Summierers 56 angelegt. Im zweiten Zweig 82 der Signalumformungsanordnung 52 wird der Stellbefehl zunächst durch den Signalverzögerer 58 zeitlich um eine Zeit Δt verzögert und im zweiten Verstärker 60 mit einer vorgegebenen, zweiten Verstärkung verstärkt und an den zweiten Eingang des Summierers 56 angelegt. An diesem zweiten Eingang des Summierers 56 liegt demnach ein gegenüber dem am ersten Eingang des Summierers 56 anliegenden Rechteckimpuls verstärkter, zeitlich verzögerter Rechteckimpuls an, wie in dem Diagramm B der Figur 2 dargestellt. Am Ausgang 84 der Signalumformungsanordnung 52 liegt dann ein treppenförmiges Signal an, das zum Zeitpunkt t₀ rechteckförmig ansteigt und zum Zeitpunkt t₀+Δt noch einmal ansteigt, wie durch das Diagramm C der Figur 2 illustriert wird. Die Signalumformungsanordnung 52 führt, mathematisch betrachtet, eine Faltung des Signals an ihrem Eingang 78 mit einem zeitlich verzögerten, verstärkten Signal an ihrem Eingang 78 durch.

Man erreicht dadurch, dass der Aktor 48 mit dem Erntevorsatz 16 eine Bewegungssequenz durchführt, bei der der Aktor zunächst zum Zeitpunkt t₀ aktiviert wird. Dadurch wird das aus Erntevorsatz 16 und Arbeitsmaschine 10 bestehende System aufgrund seiner mechanischen Eigenschaften in einen Schwingungszustand versetzt; es fängt an mit seiner Eigenfrequenz zu schwingen. Zum Zeitpunkt t₀+Δt wird der Aktor 48 noch einmal (in gleicher Richtung wie zum Zeitpunkt t₀) aktiviert, d.h. das System aus Erntevorsatz 16 und Arbeitsmaschine 10 wird (zu einem Zeitpunkt, an dem die Eigenschwingung ihre erste Halbschwingung gerade beendet hat) noch einmal angestoßen. Die bereits vorhandene Schwingung und die zum Zeitpunkt t₀+Δt induzierte Schwingung heben sich dann gegeneinander auf und das System aus Erntevorsatz 16 und Arbeitsmaschine 10 kommt zur Ruhe. Dieser Sachverhalt wird im Diagramm D der Figur 2 dargestellt: die durchgezogene Linie stellt die Beschleunigung α des Erntevorsatzes 16 aufgrund der Anregung zum Zeitpunkt t₀ dar und die gestrichelte Linie ist die Beschleunigung des Erntevorsatzes 16 nur aufgrund der zum Zeitpunkt t₀+Δt erfolgten Anregung. Da beide Geschwindigkeiten sich gegenseitig aufheben, wird das System aus Erntevorsatz 16 und Arbeitsmaschine 10 zum Zeitpunkt t₀+Δt nicht mehr nennenswert schwingen.

Nach dem Ende der Verstellbewegung des Elements 16, d.h. wenn der Höhensensor 118 an die Vorgabeeinrichtung 50 meldet, dass das Element 16 (und somit der Aktor 48) eine Sollposition erreicht hat, sodass das Ausgangssignal der Vorgabeeinrichtung 50 auf null absinkt, wird die Signalumformungsanordnung 52 ein (analog zu Diagramm C in Figur 2) treppenförmiges, jedoch abfallendes Signal an die Kontrolleinrichtung 62 geben, dessen zweite Stufe wiederum die bei Ende der Verstellbewegung anderenfalls entstehenden Schwingungen abdämpft.

Die zeitliche Verzögerung Δt des Signalverzögerers 58 stimmt somit möglichst gut mit der Zeitdauer einer Halbschwingung des Systems aus Erntevorsatz 16 und Arbeitsmaschine 10 überein. Die Verstärkungen des ersten und/oder zweiten Verstärkers 54, 60 sind derart gewählt, dass sich die beschriebene Auslöschung der Eigenschwingung des Systems ergibt. Die erwähnte Verstärkung und Verzögerung hängen von der Eigenfrequenz und Dämpfung des Systems aus Erntevorsatz 16 und Arbeitsmaschine 10 ab. Da die Eigenfrequenz des Systems aus Erntevorsatz 16 und Arbeitsmaschine 10 und die Dämpfung unter anderem von der Art des Erntevorsatzes 16 (Typ, Bauart, Breite etc.) abhängen, ist im dargestellten Ausführungsbeispiel eine Bestimmungseinrichtung 72 vorgesehen, die die Verstärkung V₂ des zweiten Verstärkers 60 und die zeitliche Verzögerung Δt des Signalverzögerers 58 vorgibt. Die Bestimmungseinrichtung 72 könnte auch die Verstärkung V₁ des ersten Verstärkers 54 vorgeben, obwohl dies nicht unbedingt erforderlich ist.

Die Bestimmungseinrichtung 72 ist mit einem Sensor 86 verbunden, bei dem es sich um einen Vibrations-, Beschleunigungs- oder Trägheitssensor handelt und der am Schrägförderer 18 angebracht ist. Außerdem ist die Bestimmungseinrichtung 72 mit einem Drucksensor 88 verbunden, der den Druck in der Leitung zwischen der Kontrolleinrichtung 62 und der Kolbenkammer 68 des Aktors 48 erfasst. Vor Beginn eines Erntevorgangs kann die Bestimmungseinrichtung 72 die Kontrolleinrichtung 62 (über eine in der Figur 2 nicht gezeigte Verbindung) veranlassen, zur Kalibrierung den Aktor 48 auszufahren. Dann entsteht die Schwingung gemäß der durchgezogenen Kurve im Diagramm D der Figur 2, die mittels des Sensors 86 und/oder mittels des Drucksensors 88 aufgenommen werden kann und der Bestimmungseinrichtung 72 vorliegt. Die Bestimmungseinrichtung 72 leitet daraus die Resonanzfrequenz und Dämpfung des Systems aus Erntevorsatz 16 und Erntemaschine 10 ab und daraus (oder direkt, d.h. ohne Umweg über die Resonanzfrequenz und Dämpfung) wiederum die Verstärkung V₂ des zweiten Verstärkers 60 und die zeitliche Verzögerung Δt des Signalverzögerers 58.

Die Bestimmungseinrichtung 72 kann zusätzlich mit einem Drucksensor zur Erfassung des Drucks in einem oder beiden der vorderen Rädern 14 verbunden sein. Dieser Druck beeinflusst die Resonanzfrequenz und Dämpfung des Systems aus Erntevorsatz 16 und Erntemaschine 10. Die Berücksichtigung seiner Ausgangssignale kann somit während des Betriebs dazu dienen, ggf. die Verstärkung V₂ des zweiten Verstärkers 60 und die zeitliche Verzögerung Δt des Signalverzögerers zu modifizieren, wenn sich der Reifendruck ändern sollte. Analog beeinflusst der Füllstand im Korntank 28 und/oder im Treibstofftank (nicht gezeigt) die Resonanzfrequenz und Dämpfung des Systems aus Erntevorsatz 16 und Erntemaschine 10 und kann somit durch einen Sensor 102 erfasst werden, dessen Signal durch die Bestimmungseinrichtung 72 (anhand bekannter, in der Bestimmungseinrichtung 72 abgespeicherter Zusammenhänge) zur Feinabstimmung der Verstärkung V₂ des zweiten Verstärkers 60 und der zeitlichen Verzögerung Δt des Signalverzögerers 58 dienen. Auch können die Signale der Sensorik 70 genutzt werden, einen Parameter des Feldbodens (z.B. Härte oder Festigkeit) abzuleiten, um daraus einen Einfluss auf die Resonanzfrequenz und Dämpfung des Systems aus Erntevorsatz 16 und Erntemaschine 10 abzuleiten und durch die Bestimmungseinrichtung 72 zur Feinabstimmung der Verstärkung V₂ des zweiten Verstärkers 60 und der zeitlichen Verzögerung Δt des Signalverzögerers 58 zu verwenden.

Zur Parametrierung der Bestimmungseinrichtung 72, die benötigt wird, um die zu bedämpfende Eigenfrequenz der Erntemaschinen-Vorsatz-Einheit und deren Dämpfung zu bestimmen, können insbesondere in der Literatur (An Adaptive Input Shaping Control Scheme for Vibration Suppression in Slewing Flexible Structures; Anthony Tzes, Stephen Yurkovich; IEEE Transactions on Control Systems Technology, Vol. 1 No. 2 , June 1993; und A Frequency Domain Identification Scheme for Flexible Structure Control, Anthony Tzes, Stephen Yurkovich; Proceedings of the 27th Conference on Decicsion and Control, Austin, TX, 1968) dargestellte Verfahren eingesetzt werden. Hierzu zählen eine Rekursive Least-Square-Schätzung (Methode der kleinsten Quadrate) und verwandte sowie erweiterte Verfahren (time-varying transfer function estimation, recursive least-mean-square, Rekursive Methode der kleinsten Quadrate mit nachlassendem Gedächtnis) und Adaptive Filter im Zeit- und Frequenzbereich. Die Parametrierung kann vor und/oder während des Betriebs durchgeführt werden. Sie ist vorteilhaft, da verschiedene Kombinationen von Erntemaschinen und Vorsätze existieren. Außerdem sind Dämpfung und Eigenfrequenz von Reifenparametern, Bodenparametern, Korntankfüllstand, Dieseltankfüllstand und weiteren Maschinenparametern/-daten abhängig, wie beschrieben. Es sind allerdings auch Ausführungsformen denkbar, bei denen die die Dämpfung und Eigenfrequenz fest vorgegeben sind oder bei denen die Dämpfung und Eigenfrequenz in der oben beschriebenen Weise nur anhand der Sensoren 86 und/oder 88, aber ohne Verwendung separater Sensoren für Reifenparameter, Bodenparameter, Korntankfüllstand und/oder Dieseltankfüllstand etc. evaluiert werden.

Es sind verschiedene Modifikationen der dargestellten Ausführungsform möglich. So kann die Vorgabeeinrichtung 50 die Stellbefehle anhand aus einer Karte abgeleiteter Werte für die Topographie des Feldes erzeugen (s. WO 2008/088916 A2). Auch kann die Vorgabeeinrichtung 50 dabei den Füllstand des Korntanks 28 und/oder Kraftstofftanks (Sensor 102) verwenden, denn dieser Füllstand beeinflusst die Höhe der Vorderachse und ggf. der Hinterachse über dem Boden durch Reifenverformung und Eindringung in den Boden. Auch kann die Vorgabeeinrichtung auf die Signale des Sensors 86 (der den Höhensensor 118 ergänzt oder ersetzt) und/oder des Sensors 88 zurückgreifen, wenn eine Auflagedrucksteuerung des Erntevorsatzes 16 erfolgen soll.

Weiterhin kann ein Aktor (nicht gezeigt) dazu dienen, den Erntevorsatz 16 gegenüber dem Schrägförderer 18 um eine sich in Vorwärtsrichtung V erstreckende Achse zu schwenken, um ihn parallel zum Erdboden auszurichten (s. WO 2008/088916 A2). Dieser Aktor würde durch eine Steuerung, die analog zu der nach Figur 2 aufgebaut ist und arbeitet, angesteuert.

Bei einer anderen Ausführungsform ist das verstellbare Element ein an einem Front- oder Heckkraftheber eines Traktors angebrachtes Arbeitsgerät oder ein höhenverstellbares und/oder um eine sich in Vorwärtsrichtung erstreckende Achse schwenkbares Spritzgestänge einer selbstfahrenden Feldspritze oder ein um eine vertikale und/oder horizontale Achse verstellbarer Auswurfkrümmer eines Feldhäckslers.

## Patentansprüche

1. Anordnung zur Ansteuerung eines Aktors (48) zur Verstellung eines verstellbaren Elements (16) einer landwirtschaftlichen Arbeitsmaschine (10), mit:
einer Vorgabeeinrichtung (50) zur Erzeugung von Stellbefehlen für das verstellbare Element (16) im Sinne eines Anfahrens einer Sollposition,
einer Kontrollanordnung (62) des mit dem verstellbaren Element (16) gekoppelten Aktors (48), und
einer mit der Vorgabeeinrichtung (50) und der Kontrollanordnung (62) zusammenwirkenden Signalformungsanordnung (52), welche eingerichtet ist, die Kontrollanordnung (62) bei Erhalt eines Stellbefehls zunächst mit einem vom Stellbefehl abhängigen, ersten Signal, dass derart bemessen ist, dass der Aktor (48) das verstellbare Element (16) in eine durch den Stellbefehl vorgegebene, gewünschte Richtung auf seine Sollposition zu bewegt,
**dadurch gekennzeichnet, dass** die Signalformungsanordnung (52) eingerichtet ist, die Kontrollanordnung (62) zeitlich anschließend an das erste Signal mit einem vom Stellbefehl abhängigen, gegenüber dem ersten Signal zeitverzögerten, zweiten Signal zu beaufschlagen, das derart bemessen ist, dass das Element (16) einen mechanischen Impuls erhält, der eine aufgrund des ersten Stellbefehls entstandene Eigenschwingung des aus Arbeitsmaschine (10) und Element (16) bestehenden Systems reduziert oder auslöscht.

2. Anordnung nach Anspruch 1, wobei die zeitliche Verzögerung (Δt) des zweiten Signals gegenüber dem ersten Signal einer halben Schwingungsperiode der Eigenschwingung des aus Arbeitsmaschine (10) und Element (16) bestehenden Systems entspricht.

3. Anordnung nach Anspruch 1 oder 2, wobei die Amplitude des zweiten Signals derart bemessen ist, dass eine Auslöschung der durch das erste Signal angeregten Eigenschwingung des aus Arbeitsmaschine (10) und Element (16) bestehenden Systems erfolgt.

4. Anordnung nach einem der Ansprüche 1 bis 3, wobei die Signalformungsanordnung (52) einen mit der Vorgabeeinrichtung (50) verbundenen Eingang (78) und einen mit der Kontrollanordnung (62) verbundenen Ausgang (84), einen mit dem Eingang (78) und dem Ausgang (84) verbundenen, ersten Zweig (80), der den Stellbefehl mit einer ersten Verstärkung (V₁) an den Ausgang weiterleitet sowie einen zweiten Zweig (82) umfasst, der den Stellbefehl durch einen Signalverzögerer (58) leitet und mit einer zweiten Verstärkung (V₂) an den Ausgang (84) weitergibt.

5. Anordnung nach Anspruch 4, wobei die erste Verstärkung (V₁) und/oder die zweite Verstärkung (V₂) und/oder die zeitliche Verzögerung (Δt) des Signalverzögerers (58) durch eine Bestimmungseinrichtung (72) vorgebbar ist oder sind, die diese anhand von Daten hinsichtlich einer erfassten Resonanzfrequenz und/oder eines Dämpfungsfaktors des aus der Arbeitsmaschine (10) mit dem Element (16) bestehenden Systems festlegt.

6. Anordnung nach Anspruch 5, wobei die Bestimmungseinrichtung (72) mit einem Drucksensor (88) zur Erfassung des Drucks in einem als Aktor (48) vorgesehenen Hydraulikzylinder und/oder mit einem Sensor (88) zur Erfassung der Bewegung des Elements (16) und/oder einem elektrischen Sensor zur Erfassung der elektrischen Ansteuerung eines elektrischen Aktors verbunden ist und vor Aufnahme und/oder während des Betriebs des Arbeitsfahrzeugs (10) aus den Signalen des Sensors (86, 88) die Daten hinsichtlich der Resonanzfrequenz und/oder des Dämpfungsfaktors des aus der Arbeitsmaschine (10) mit dem Element (16) bestehenden Systems ableitet.

7. Anordnung nach Anspruch 5 oder 6, wobei der Bestimmungseinrichtung (72) Signale hinsichtlich eines Reifenparameters und/oder Bodenparameters und/oder eines Füllstand eines Behälters des Arbeitsfahrzeugs (10), insbesondere eines Korntanks (28) und/oder eines Kraftstofftanks zuführbar sind und die Bestimmungseinrichtung (72) aus den erwähnten Signalen die Daten hinsichtlich der Resonanzfrequenz und/oder des Dämpfungsfaktors des aus der Arbeitsmaschine (10) mit dem Element (16) bestehenden Systems ableitet.

8. Anordnung nach einem der vorhergehenden Ansprüche, wobei die Vorgabeeinrichtung (50) die Stellbefehle anhand von Ausgangswerten vorausschauender oder mechanisch mit dem Boden zusammenwirkender Sensoren (70, 118) oder aus einer Karte abgeleiteter Werte produziert, wozu sie zusätzlich optional den Füllstand eines Behälters des Arbeitsfahrzeugs, insbesondere eines Korntanks (28) und/oder eines Kraftstofftanks, und/oder einen Drucksensor (88) zur Erfassung des Drucks in einem als Aktor (48) vorgesehenen Hydraulikzylinder und/oder Signale eines Sensors (88) zur Erfassung der Bewegung des Elements (16) verwenden kann.

9. Anordnung nach einem der vorhergehenden Ansprüche, wobei das verstellbare Element ein an einem Front- oder Heckkraftheber eines Traktors angebrachtes Arbeitsgerät oder ein höhenverstellbares und/oder um eine sich in Vorwärtsrichtung erstreckende Achse schwenkbares Spritzgestänge einer selbstfahrenden Feldspritze oder ein um eine horizontale, in Vorwärtsrichtung einer Erntemaschine (10) und/oder quer dazu verstellbarer Erntevorsatz (16) oder ein um eine vertikale und/oder horizontale Achse verstellbarer Auswurfkrümmer eines Feldhäckslers ist.

10. Landwirtschaftliches Arbeitsfahrzeug (10) mit einem verstellbaren Element (16) und einer Anordnung nach einem der vorhergehenden Ansprüche.

## Claims

1. Arrangement for actuating an actuator (48) for adjusting an adjustable element (16) of an agricultural working machine (10), having:
a predefinition device (50) for generating actuator commands for the adjustable element (16) with the aim of approaching a target position,
a control arrangement (62) of the actuator (48) which is coupled to the adjustable element (16), and
a signal-shaping arrangement (52) which interacts with the predefinition device (50) and the control arrangement (62) and which is configured when an actuator command is received the control arrangement (62) firstly with a first signal which is dependent on the actuator command that is dimensioned in such a way that the actuator (48) moves the adjustable element (16) in a desired direction, predefined by the activating command, toward its target position,
**characterized in that** the signal-shaping arrangement (52) is configured to apply to the control arrangement (62), subsequently to the first signal, a second signal which is dependent on the actuator command and has a delay with respect to the first signal and is dimensioned in such a way that the element (16) receives a mechanical impulse which reduces or extinguishes a natural oscillation, arising owing to the first actuator command, of the system which is composed of the working machine (10) and element (16).

2. Arrangement according to Claim 1, wherein the delay (Δt) of the second signal with respect to the first signal corresponds to half an oscillation period of the natural oscillation of the system which is composed of a working machine (10) and element (16).

3. Arrangement according to Claim 1 or 2, wherein the amplitude of the second signal is dimensioned in such a way that the natural oscillation, excited by the first signal, of the system which is composed of the working machine (10) and element (16) is extinguished.

4. Arrangement according to one of Claims 1 to 3, wherein the signal-shaping arrangement (52) comprises an input (78) which is connected to the predefinition device (50) and an output (84) which is connected to the control arrangement (62), a first branch (80) which is connected to the input (78) and to the output (84) and which passes on the actuator command with a first gain (V₁) to the output and comprises a second branch (82) which feeds the actuator command through a signal delay element (58) and passes it on with a second gain (V₂) to the output (84).

5. Arrangement according to Claim 4, wherein the first gain (V₁) and/or the second gain (V₂) and/or the delay (Δt) of the signal delay element (58) can be predefined by a determining device (72) which defines these on the basis of data relating to a detected resonance frequency and/or a damping factor of the system which is composed of the working machine (10) with the element (16).

6. Arrangement according to Claim 5, wherein the determining device (72) is connected to a pressure sensor (88) for detecting the pressure in a hydraulic cylinder which is provided as an actuator (48) and/or having a sensor (88) for detecting the movement of the element (16) and/or an electric sensor for detecting the electrical actuation of an electric actuator, and before the start of operation and/or during the operation of the working vehicle (10) the data relating to the resonance frequency and/or the damping factor of the system which is composed of the working machine (10) with the element (16) are derived from the signals of the sensor (86, 88).

7. Arrangement according to Claim 5 or 6, wherein signals relating to a tyre parameter and/or ground parameter and/or a filling level of a container of the working vehicle (10), in particular of a grain tank (28) and/or of a fuel tank, can be fed to the determining device (72), and the determining device (72) derives, from the abovementioned signals, the data relating to the resonance frequency and/or the damping factor of the system which is composed of the working machine (10) with the element (16).

8. Arrangement according to one of the preceding claims, wherein the predefinition device (50) produces the actuator commands on the basis of output values of sensors (70, 118) which are predictive or interact mechanically with the ground or from values which are derived from a map, for which purpose said predefinition device can additionally optionally use the filling level of a container of the working vehicle, in particular of a grain tank (28) and/or of a fuel tank, and/or a pressure sensor (88) for detecting the pressure in a hydraulic cylinder which is provided as an actuator (48) and/or signals of a sensor (88) for detecting the movement of the element (16).

9. Arrangement according to one of the preceding claims, wherein the adjustable element is an implement which is mounted on a front-mounted or rear-mounted hydraulic lift device of a tractor, or a sprayer boom which is vertically adjustable and/or can be pivoted about an axis which extends in the forward direction, of a self-propelling field sprayer or a harvesting attachment (16) which can be adjusted about a horizontal in the forward direction of a harvesting machine (10) and/or transverse with respect thereto or an ejection chute, which can be adjusted about a vertical and/or horizontal axis, of a field chopper.

10. Agricultural working vehicle (10) with an adjustable element (16) and an arrangement according to one of the preceding claims.

## Revendications

1. Arrangement pour commander un actionneur (48) servant au positionnement d'un élément positionnable (16) d'une machine de travail agricole (10), comprenant :
un dispositif de prédéfinition (50) destiné à générer des instructions de commande pour l'élément positionnable (16) dans le sens d'une approche d'une position de consigne,
un arrangement de contrôle (62) de l'actionneur (48) accouplé à l'élément positionnable (16), et
un arrangement de mise en forme de signal (52) qui coopère avec le dispositif de prédéfinition (50) et l'arrangement de contrôle (62) et qui est conçu pour, lors de la réception d'une instruction de commande, tout d'abord l'arrangement de contrôle (62) avec un premier signal dépendant de l'instruction de commande, lequel est dimensionné de telle sorte que l'actionneur (48) déplace l'élément positionnable (16) vers sa position de consigne dans une direction souhaitée prédéfinie par l'instruction de commande,
**caractérisé en ce que** l'arrangement de mise en forme de signal (52) est conçu pour, chronologiquement à la suite du premier signal, solliciter l'arrangement de contrôle (62) avec un deuxième signal dépendant de l'instruction de commande, retardé dans le temps par rapport au premier signal, lequel est dimensionné de telle sorte que l'élément positionnable (16) reçoit une impulsion mécanique qui réduit ou efface une oscillation propre, produite en raison de la première instruction de commande, du système constitué de la machine de travail (10) et de l'élément (16).

2. Arrangement selon la revendication 1, le retard dans le temps (Δt) du deuxième signal par rapport au premier signal correspondant à une demie période d'oscillation de l'oscillation propre du système constitué de la machine de travail (10) et de l'élément (16) .

3. Arrangement selon la revendication 1 ou 2, l'amplitude du deuxième signal étant dimensionnée de telle sorte qu'un effacement de l'oscillation propre excitée par le premier signal du système constitué de la machine de travail (10) et de l'élément (16) est effectué.

4. Arrangement selon l'une des revendications 1 à 3, l'arrangement de mise en forme de signal (52) comportant une entrée (78) reliée au dispositif de prédéfinition (50) et une sortie (84) reliée à l'arrangement de contrôle (62), une première branche (80) reliée à l'entrée (78) et à la sortie (84), laquelle retransmet l'instruction de commande à la sortie avec une première amplification (V₁), ainsi qu'une deuxième branche (82) qui achemine l'instruction de commande à travers un retardateur de signal (58) et la restitue à la sortie (84) avec une deuxième amplification (V₂).

5. Arrangement selon la revendication 4, la première amplification (V₁) et/ou la deuxième amplification (V₂) et/ou le retard dans le temps (Δt) du retardateur de signal (58) pouvant être prédéfinis par un dispositif de détermination (72), lequel fixe ceux-ci à l'aide de données concernant une fréquence de résonance et/ou un facteur d'amortissement détectés du système constitué de la machine de travail (10) avec l'élément (16) .

6. Arrangement selon la revendication 5, le dispositif de détermination (72) étant relié à un capteur de pression (88) destiné à détecter la pression dans un vérin hydraulique présent en tant qu'actionneur (48) et/ou à un capteur (88) destiné à détecter le mouvement de l'élément (16) et/ou à un capteur électrique destiné à détecter l'excitation électrique d'un actionneur électrique et, avant la prise en charge et/ou pendant le fonctionnement du véhicule de travail (10), dérivant les données concernant la fréquence de résonance et/ou le facteur d'amortissement du système constitué de la machine de travail (10) avec l'élément (16) à partir des signaux du capteur (86, 88).

7. Arrangement selon la revendication 5 ou 6, des signaux concernant un paramètre de pneu et/ou un paramètre de sol et/ou un niveau de remplissage d'un réservoir du véhicule de travail (10), notamment d'un réservoir à grains (28) et/ou d'un réservoir à carburant pouvant être acheminés au dispositif de détermination (72), et le dispositif de détermination (72) dérivant données concernant la fréquence de résonance et/ou le facteur d'amortissement du système constitué de la machine de travail (10) avec l'élément (16) à partir des signaux mentionnés.

8. Arrangement selon l'une des revendications précédentes, le dispositif de prédéfinition (50) produisant les instructions de commande à l'aide de valeurs de sortie de capteurs (70, 118) prédictifs ou coopérant mécaniquement avec le sol ou à partir de valeurs dérivées d'une carte, en pouvant utiliser facultativement en plus le niveau de remplissage d'un réservoir du véhicule de travail (10), notamment d'un réservoir à grains (28) et/ou d'un réservoir à carburant, et/ou un capteur de pression (88) destiné à détecter la pression dans un vérin hydraulique présent en tant qu'actionneur (48) et/ou les signaux d'un capteur (88) destiné à détecter le mouvement de l'élément (16).

9. Arrangement selon l'une des revendications précédentes, l'élément positionnable étant un appareil de travail monté sur un relevage hydraulique avant ou arrière d'un tracteur ou une rampe de pulvérisation positionnable en hauteur et/ou pivotante avec un axe s'étendant dans le sens de la marche avant d'un pulvérisateur agricole automoteur ou une tête de récolte (16) positionnable autour d'un horizontal dans le sens de la marche avant d'une récolteuse (10) et/ou transversalement par rapport à celle-ci ou encore une goulotte positionnable autour d'un axe vertical et/ou horizontal d'une récolteuse-hacheuse.

10. Véhicule de travail agricole (10) équipé d'un élément positionnable (16) et d'un arrangement selon l'une des revendications précédentes.
